# EUROPÄISCHE PATENTSCHRIFT

(11) **EP 1 199 232 B1**
(45) Veröffentlichungstag und Bekanntmachung des Hinweises auf die Patenterteilung: **26.10.2005**
(21) Anmeldenummer: 01122075.3
(22) Anmeldetag: 14.09.2001
(51) Int. Cl.: B60T 1/00, B60T 13/22, B60T 13/68, F16H 63/48

(54) **Steuereinrichtung für die Parksperre eines Kraftfahrzeugs**
Control device for the parking lock of an motor vehicle
Dispositif de commande d'un dispositif de blocage de stationnement d'une automobile

(30) Priorität: 19.10.2000 DE 10052260
(43) Veröffentlichungstag der Anmeldung: 24.04.2002
(73) Patentinhaber: DEERE & COMPANY, Moline, Illinois 61265-8098 (US)
(72) Erfinder: Schäfer, Helmut, 68775 Ketsch (DE); Hoess, Bruno, Dr., 77833 Ottersweier (DE); Poehlman, Michael, 68723 Schwetzingen (DE)
(74) Vertreter: Lau-Loskill, Philipp

(56) Entgegenhaltungen:
- US-A- 5 370 449

## Beschreibung

Die Erfindung betrifft Parksperre eines Kraftfahrzeugs mit einer Steuereinrichtung mit wenigstens einem Hydraulikzylinder, dessen Kolbenraum mittels einer Ventilanordnung mit Hydraulikdruck beaufschlagbar ist und dessen Hydraulikkolben mit Eingriffselementen der Parksperre mechanisch in Verbindung steht. Die Parksperre wird in Abhängigkeit des Hydraulikdrucks im Kolbenraum in eine eingerückte bzw. ausgerückte Position gedrängt. Der Kolbenraum steht mit einem Drucksensor in Verbindung, dessen Drucksignale den Zustand der Parksperre repräsentieren und durch eine elektrische Steuereinheit ausgewertet werden.

Bei heutigen Fahrzeuggetrieben (synchronisierte, lastschaltbare oder automatische Getriebe) wird die Parksperre üblicherweise manuell über mechanisches Gestänge eingelegt, um die Drehbewegung von Getriebe- oder Fahrzeugrädern formschlüssig zu blockieren. Im Zuge von Komfortverbesserung werden Getriebe mit elektrisch betätigter Gangschaltung ausgeführt, so dass der Gangschaltbefehl vom Fahrer per Knopfdruck erfolgt. In diese Servobetätigung sollte sinnvollerweise auch die Parksperre miteinbezogen werden. Bei Verwendung stufenloser Getriebe, die einen kraftschlüssigen Stillstand durch Einstellung einer unendlich großen Übersetzung realisieren können, sollte die Parksperrenbetätigung automatisiert werden, damit der Übergang von kraftschlüssigem Stillstand in die Parkstellung (und umgekehrt) ohne Unterbrechung der Bremswirkung des Fahrzeuges erfolgt. Es wird somit angestrebt, die Betätigung einer Parksperre (einer mechanischen, formschlüssigen Verriegelung eines abtriebsseitigen Zahnrades) so zu gestalten, dass das Verriegeln und Entriegeln der Parksperre durch eine elektrische Befehlsübertragung erfolgt.

Da von der Parksperrenfunktion ganz wesentlich die Betriebssicherheit des Fahrzeuges abhängt, sollte die Konstruktion und Auslegung betriebssicher, bzw. redundant sein. Dies betrifft vor allem das zuverlässige Ausführen des Fahrerwunsches nach Ver- oder Entriegelung, das Verhindern von unbeabsichtigter Verriegelung bei Fahrt und eine unbeabsichtigte Entriegelung im Stillstand (beispielsweise durch Ausfall der Hilfsenergie, Kurzschluss im Stromkreis und dergleichen). Der elektrischen Steuereinheit sollte daher jederzeit eine Rückmeldung über den aktuellen Zustand der Parksperre zur Verfügung stehen.

Für eine Erkennung des Parksperrenzustands ist eine Erfassung wenigstens der beiden Endstellungen der Parksperre "Verriegelt" und "Entriegelt" erforderlich. Hierfür kommen grundsätzlich Wegsensoren oder Endschalter in Betracht, die die Position der Betätigungsmechanik der Parksperre erfassen und bei Erreichen der jeweiligen Endstellung einen Kontakt schließen. Da die Endstellungen der Betätigungsmechanik jedoch stark toleranz- und verschleißbehaftet sind, lassen sich die entsprechenden Signale nicht mit hinreichender Genauigkeit erfassen. Die Zuverlässigkeit der Wegsensoren könnte unter den schlagartigen Bewegungen der Betätigungsmechanik beeinträchtigt werden. Falls eine Nachrüstung mit elektrischer Parksperre erfolgen soll, ist es schwierig, Wegsensoren oder Endschalter in bereits vorhandene Getriebegehäuse einzubauen, ohne die vorhandene Getriebestruktur zu ändern.

Die Parksperre enthält im allgemeinen eine Sperrklinke deren Verzahnung sich mit der Verzahnung eines Zahnrades des Antriebsstranges in Eingriff bringen lässt, so dass Formschluss hergestellt wird und eine Drehbewegung des Antriebsstrangzahnrades und damit eine Bewegung des Fahrzeugs verhindert wird. Beim Einrücken der Parksperre im Stillstand aus ihrer ausgerückten Position kann es entsprechend der Zahnteilung bzw. dem Verhältnis von Zahnkopfbreite zu Lückenweite gelegentlich dazu kommen, dass der Zahnkopf der Sperrklinke auf dem Zahnkopf des Zahnrades aufsteht. Diese Zahn-auf-Zahn-Stellung verhindert, dass die gesamte mechanische Betätigungskette ihre Endstellung für die eingerückte Position erreicht. Allerdings genügt eine äußerst geringe Fahrzeugbewegung, um die Sperrklinke in die nächste Zahnlücke einschnappen zu lassen. Ein Wegsensor würde bei einer Zahn-auf-Zahn-Stellung nicht erkennen, dass die Verriegelungsposition erreicht ist.

Es wäre auch denkbar, einen Wegsensor direkt am Hydraulikkolben anzuordnen, um die Kolbenbewegung zu überwachen. Dies erfordert jedoch einen großen konstruktiven Aufwand, da entweder druckdichte bzw. druckkompensierte Durchführungen für Kontaktschalter oder aufwendige Verbindungsgestänge zum Hydraulikkolben notwendig wären.

In der US-A-5,370,449 wird eine elektrisch betätigte reibschlüssige Parkbremse beschrieben, bei der ein Drucksensor verwendet wird, um festzustellen, ob die Bremse angelegt (niedriger Druck) oder gelöst (hoher Druck) ist. Sobald der Drucksensor einen hohen Druck meldet, was einer gelösten Bremse entspricht, wird der voreingestellte Gang des Getriebes eingelegt. Es wird jedoch kein Sensorsignal für den Übergangsbereich der Bremswirkung, also zwischen voller Bremswirkung und gelöstem Zustand, ausgewertet, so dass dieser Bereich undefiniert bleibt und sich eine Unschärfe in der Getriebesteuerung ergibt. Dies birgt die Gefahr in sich, dass das Getriebe kraftschlüssig wird bevor die Bremse gelöst ist. Auch könnte die Bremse schon gelöst sein, bevor das Getriebe greift, so dass das traktionslose Fahrzeug am Hang unkontrolliert losrollen kann. Bei der Steuerung von formschlüssigen Parksperren treten überdies andere Probleme auf als bei reibschlüssigen Parkbremsen.

Die der Erfindung zugrunde liegende Aufgabe wird darin gesehen, eine Steuereinrichtung der eingangs genannten Art für die Parksperre eines Kraftfahrzeugs anzugeben, durch welche die vorgenannten Probleme überwunden werden. Insbesondere soll sie einem hohen Sicherheitsstandard gerecht werden sowie es ermöglichen, Fahrzeuge nachträglich auf einfache Weise mit einer elektrischen Steuereinrichtung für eine Parksperre auszurüsten. Die Steuereinrichtung soll eine frei wählbare Anbringung ermöglichen, eine einfache Konstruktion aufweisen und reparaturfreundlich sein. Sie soll die systembedingte Zahn-auf-Zahn-Stellung als normalen Betriebszustand (eingerückte Stellung) behandeln und diverse Plausibilitätsprüfungen ermöglichen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Parksperre mit einer Steuereinrichtung enthält wenigstens einen Hydraulikzylinder und einen Drucksensor, der den Druck in dem Hydraulikzylinder unmittelbar oder mittelbar erfasst. Der Hydraulikkolben des Hydraulikzylinders steht mit Eingriffselementen der Parksperre mechanisch in Verbindung, so dass in Abhängigkeit des Hydraulikdrucks die Parksperre in eine eingerückte bzw. ausgerückte Position gedrängt wird. Der Drucksensor gibt Drucksignale aus, die den Zustand der Parksperre repräsentieren und durch eine elektrische Steuereinheit ausgewertet werden. Die Drucksignale des Drucksensors werden hinsichtlich wenigstens zweier vorgebbarer Druckschwellenwerte ausgewertet. Es ist ein erster Druckschwellenwert definiert, der dem eingerückten Zustand der Parksperre entspricht. Ein zweiter Druckschwellenwert, der sich vom ersten Druckschwellenwert unterscheidet, entspricht dem ausgerückten Zustand der Parksperre. Der zweite Druckschwellenwert ist dabei in der Regel größer als der erste Druckschwellenwert.

Damit erkennt die Steuer- oder Auswerteeinheit wenigstens drei Druckbereiche: einen unteren Druckbereich, bei dem die Parksperre eingerückt ist, einen oberen Druckbereich, bei dem die Parksperre ausgerückt ist, und einen mittleren Übergangsbereich. In der Steuereinrichtung liegt jederzeit eine eindeutige Rückmeldung über den momentanen Zustand der Parksperrenbetätigung vor. Es werden Signale bereitgestellt, die es ermöglichen eine Verriegelungsschaltung aufzubauen, die hohen Sicherheitsansprüchen genügt.

In Verbindung mit weiteren zur Verfügung stehenden Eingangssignalen, wie Befehlen der Bedienungsperson, Abtriebsdrehzahl, Magnetventilspannungen, Zündung, Motordrehzahl und dergleichen, lassen sich mit Hilfe der Druckbereichsermittlung vielfältige Plausibilitätsabfragen und Fehlermeldungen erzeugen. Die Signale der Steuer- und Auswerteeinheit können für eine Rückmeldung an die Bedienungsperson und/oder zur Steuerung des Getriebes verwendet werden. Sie können auch für eine Fehlerdiagnose hinsichtlich hydraulischer und/oder elektrischer Schäden herangezogen werden.

Der Drucksensor kann auf einfache Weise unmittelbar an den Kolbenraum oder an einen Kanal angeschlossen werden, welcher mit einer Verbindungsleitung, die zwischen der Ventilanordnung und dem Kolbenraum des Hydraulikzylinders verläuft, verbunden ist. Der Anbringungsort des Drucksensors lässt sich damit frei wählen. Dies erlaubt eine einfache konstruktive und reparaturfreundliche Ausbildung. Die elektrische Parksperreneinheit ist auch auf einfache Weise nachrüstbar. Vorzugsweise wird ein Drucksensor gewählt, der in der Mobilhydraulik auf Druckpulsationen und Druckspitzen ausgelegt und somit an die rauhen Arbeitsbedingungen angepasst ist.

Die oben erwähnte Zahn-auf-Zahn-Stellung bringt bei Anwendung der erfindungsgemäßen Lösung keine Probleme, weil die Steuereinrichtung ohne weiteres erkennt, dass die untere Druckschwelle unterschritten ist und die Parksperre hierbei ihre eingerückte Stellung einnimmt.

Der Drucksensor und die Auswertung von mindestens zwei Druckschwellen ermöglicht in Verbindung mit stufenlosen Getrieben mit kraftschlüssigem Stillstand einen komfortablen, sicheren Übergang von der Parkstellung in die Fahrstellung und umgekehrt, ohne dass die Bedienungsperson einen besonderen Eingriff vornehmen muss.

Die Bereitstellung der Druckschwellenwerte ermöglicht einen sicheren Fahrzeugbetrieb. Insbesondere lässt sich der Übergangsbereich zwischen eingerückter und ausgerückter Parksperre zuverlässig erkennen, so dass eine fehlerhafte Steuerung des Fahrzeuggetriebes vermieden werden kann. Beispielsweise kann beim Übergang von Fahren nach Park der Zustand "kraftschlüssiger Stillstand" solange aufrechterhalten werden, bis der untere Druckschwellenwert unterschritten worden ist.

Insbesondere um Probleme zu vermeiden, die mit der oben beschriebenen Zahn-auf-Zahn-Stellung zusammenhängen, sieht eine bevorzugte Weiterbildung der Erfindung vor, die Verbindung zwischen dem Hydraulikkolben und einer Betätigungsmechanik für die Parksperre derart auszulegen, dass lediglich Druckkräfte übertragen werden. Beispielsweise enthält die Betätigungsmechanik einen Betätigungsschaft, der mit dem Hydraulikkolben über eine Gleitverbindung in Verbindung steht. Normalerweise wird der Betätigungsschaft durch eine Hauptfeder der Betätigungsmechanik gegen den Hydraulikkolben gedrückt. Im Falle eines drucklosen Zylinders und einer Zahn-auf-Zahn-Stellung kann der Hydraulikkolben seine Ruhestellung einnehmen wobei die Betätigungsmechanik noch ausgelenkt ist, so dass sich ein Zwischenraum zwischen dem Betätigungsschaft und dem Hydraulikkolben ausbildet.

Hierbei ist es auch von Vorteil eine Druckfeder vorzusehen, die den Hydraulikkolben unabhängig von der Betätigungsmechanik in seine drucklose Stellung drängt. Ist das Betätigungsgestänge wegen einer Zahn-auf-Zahn-Stellung blockiert, so wird der Kolben bei fehlender Druckbeaufschlagung unter der Wirkung der Druckfeder bis zu einem Anschlag im Kolbenraum zurückgestellt. Erst dann fällt der Druck im Kolbenraum von einem Wert, der aus der Federkraft und dem Kolbenquerschnitt ableitbar ist, auf Null oder das Druckniveau des Vorratsbehälters ab. Mit Erreichen des Anschlags ermöglicht der Hydraulikkolben das Einlegen der Parksperre. Wenn durch eine geringe Fahrzeugbewegung eine Zahnlücke frei wird, schnappt die Sperrklinke unmittelbar und ungedämpft ein.

Vorzugsweise greift an der Betätigungsmechanik der Parksperre eine Hauptfeder an, die die Betätigungsmechanik in ihre Sperrstellung und über ein Betätigungselement den Hydraulikkolben in seine drucklose Stellung drängt.

Bevorzugte Weiterbildungen der Erfindung richten sich auf die Festlegung der ersten und zweiten Druckschwelle. Der erste Druckschwellenwert hängt von der Auslegung des Hydraulikkolbens und der Wirkung wenigstens einer Feder ab, die den Hydraulikkolben gegen den von der Ventilanordnung erzeugten Hydraulikdruck in seine drucklose Anschlagstellung drängt. Die Feder weist in der Anschlagstellung eine Restkraft auf, mit der der Hydraulikkolben gegen einen Anschlag gedrückt wird. Die Restkraft der Feder wird durch ihre Federvorspannung bestimmt und entspricht einem Hydraulikdruck in dem Kolbenraum. Die erste Druckschwelle wird hierbei so festgelegt, dass sie einem Wert entspricht, der zwischen Null und der genannten Federvorspannung liegt. Das heißt, die erste Druckschwelle liegt zwischen dem Druck Null und dem Druck, der im Kolbenraum zu dem Zeitpunkt herrscht, zu dem der sich in seine drucklose Stellung bewegende Hydraulikkolben gerade seine Anschlagsstellung erreicht.

Bei eingerückter Parksperre ist der Kolbenraum drucklos. Im Sinne einer kostengünstigen Serienfertigung eines Drucksensors, bei dem eine begrenzte Auflösung im Bereich kleiner Drücke zugelassen wird, sollte der untere Schwellwert zweckmäßigerweise möglichst groß gewählt werden. Andererseits sollte - im Falle einer Zahn-auf-Zahn-Stellung - der Kolbenraumdruck den unteren Druckschwellenwert erst dann unterschreiten, wenn der Hydraulikkolben seinen Anschlag im Kolbenraum erreicht hat. Es ist somit vorteilhaft, die erste Druckschwelle so einzustellen, dass sie deutlich größer als Null ist und lediglich geringfügig unter dem der Federvorspannung entsprechenden Druckwert liegt.

Um einen hinreichenden Sicherheitsabstand zu beiden Seiten zu gewährleisten, sieht eine vorteilhafte Auslegung der Erfindung vor, dass die erste Druckschwelle auf einen Wert von 40% bis 80% des der Federvorspannung entsprechenden Druckwertes festgelegt wird.

Auch der zweite Druckschwellenwert hängt vorzugsweise von der Auslegung des Hydraulikkolbens und der Wirkung wenigstens einer Feder ab und liegt zwischen dem Federdruck, der der Federkraft in der maximal ausgerückten Stellung des Hydraulikkolbens entspricht, und dem durch die Ventilanordnung bereitgestellten Hydrauliksystemdruck liegt. Vorzugsweise entspricht die zweite Druckschwelle einem Wert von 60% bis 90% des Versorgungs- oder Systemdrucks.

Vorzugsweise ist der Drucksensor ein analoger Sensor, dessen jeweiliger Spannungsausgangssignalwert dem Druck im Kolbenraum entspricht.

Liegt der vom Sensor gemessene Druckwert außerhalb des üblichen Bereichs, ist er also geringer als Null oder größer als es dem System- oder Versorgungsdruck entspricht, so wird von der Auswerteelektronik auf einen defekten Drucksensor geschlossen. In vorteilhafter Weise kann der Drucksensor auch eine Möglichkeit zur Diagnose rein elektrischer Fehler enthalten, durch die beispielsweise eine elektrische Unterbrechung erkannt werden kann. Hierfür schlägt eine zweckmäßige Weiterbildung der Erfindung vor, dass das Spannungsausgangssignal des Drucksensors schon im drucklosen Zustand größer als Null ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Funktionsschema einer elektrischen Parksperre mit hydraulischen und elektrischen Steuerkreisen und mit einer erfindungsgemäßen Steuereinrichtung und
- Fig. 2: das Zeitdiagramm einer gleichmäßigen Druckbeaufschlagung und anschließender Druckentlastung des Kolbenraums des Parksperrenhydraulikzylinders.

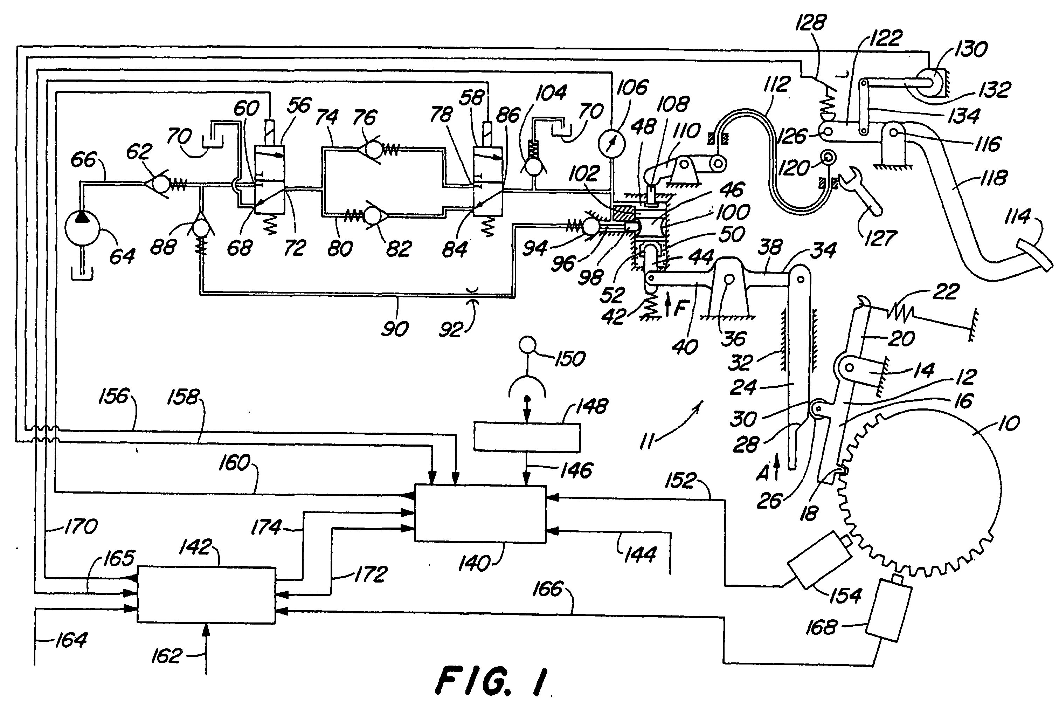

Die in Fig. 1 dargestellte Steuereinrichtung kann bei einer Parksperre eines Ackerschleppers Anwendung finden. Es ist ein Ausgangszahnrad 10 des Fahrzeuggetriebes erkennbar, das drehfest mit den nicht dargestellten angetriebenen Achsen und Rädern des Ackerschleppers verbunden sind.

Es ist eine mechanische Verriegelungsvorrichtung 11 vorgesehen, die eine wippenförmig ausgebildete Sperrklinke 12 enthält, welche mittels einer Halterung 14 verschwenkbar am nicht gezeigten Getriebegehäuse oder Fahrzeugchassis gelagert ist. Ein erster Arm 16 der Sperrklinke 12 trägt eine Verzahnung 18. Durch Verschwenken der Sperrklinke 12 lässt sich die Verzahnung 18 der Sperrklinke 12 mit der Verzahnung des Ausgangszahnrades 10 in Eingriff bringen, so dass Formschluss hergestellt und eine Drehung des Ausgangszahnrades 10 und damit eine Bewegung des Fahrzeugs verhindert wird. Die Verzahnungsgeometrie ist abweisend gestaltet, so dass auch unter Maximalbelastungen (Fahrzeuggewicht, Hangneigung, Traktionsbeiwert etc.) die Sperrklinke 12 sicher aus ihrem Eingriff mit dem Ausgangszahnrad 10 lösbar ist. Am zweiten Arm 20 der Sperrklinke 12 greift eine Rückstellfeder 22 an, die ein sicheres Rückstellen der Sperrklinke 12 in ihre Ruhestellung, in der ihre Verzahnung 18 nicht in die Verzahnung des Ausgangszahnrades 10 eingreift, bewirkt, sofern auf die Sperrklinke 12 keine weitere mechanische Kraft ausgeübt wird.

Die Verriegelungseinrichtung 11 kann des weiteren eine federvorgespannte Betätigungswelle enthalten, deren Stirnseite Betätigungsnocken aufweist. Beim Verdrehen der Betätigungswelle tritt der Betätigungsnocken über eine reibungsmindernde Rolle mit einer Sperrklinke 12 in Eingriff, und bewirkt ein Verschwenken der Sperrklinke 12. Eine derartige Ausbildung ist bekannt und wird beispielsweise bei den John Deere Ackerschleppern der Serie 6610 verwendet. Zum besseren Verständnis ist in der Zeichnung an Stelle der Betätigungswelle ein verschiebbarer Riegel 24 dargestellt. Der Riegel 24 weist an einer Seite eine schräge Rampe (Nocken) auf, die über eine am ersten Arm 16 der Sperrklinke 12 angebrachte reibungsmindernde Rolle 26 ein Verschwenken der Sperrklinke 12 bewirkt. Die Rampe umfasst einen Bereich 28 mit steilerem Winkel, der im Schwenkbereich der Sperrklinke 12 liegt, und einen Bereich 30 mit flachem Winkel, der im Eingriffsbereich (Parkstellung) der Sperrklinke 12 liegt und die Rückwirkung von hohen fahrzeugseitigen Lasten auf die Betätigung minimiert. Durch Verschiebung des Riegels 24 in Pfeilrichtung A wird die Sperrklinke 12 in ihre ausgerückte Stellung, und durch Zurückschieben gegen die Pfeilrichtung A in ihre eingerückte Parkposition, in der der Bereich 30 mit flacherem Winkel mit der Rolle 26 in Eingriff steht (wie dargestellt), verstellt.

Der in einer Führung 32 geführte Riegel 24 ist an einem ersten Arm 34 eines um eine ortsfeste Drehachse 36 verschwenkbaren Balkens 38 gelenkig angeordnet. An dem zweiten Arm 40 des Balkens 38 greift eine Hauptfeder 42 an, die eine Kraft in Pfeilrichtung F ausübt und den Riegel 24 gegen die Pfeilrichtung A in die dargestellte eingerückte Stellung drängt. Im Gegensatz zu bisherigen manuellen Betätigungen nimmt die Verriegelungseinrichtung 11 bei fehlender weiterer Krafteinwirkung ihre verriegelte (eingerückte) Position (Default-Stellung) ein. Dies gewährleistet bei Ausfall der Hilfsenergie einen sicheren Fahrzeugzustand.

Am zweiten Arm 40 des Balkens 38 greift des weiteren der Betätigungsschaft 44 eines hydraulischen Betätigungskolbens 46 gelenkig an. Der Kolben 46 wird von einer Gehäusebohrung verschiebbar aufgenommen und begrenzt an seiner dem Betätigungsschaft 44 abgewandten Stirnseite einen Kolbenraum 48. Eine Druckfeder 50 drängt den Kolben 46 in Richtung Kolbenraum 48. Der Betätigungsschaft 44 ist am Kolben 46 nicht starr befestigt. Vielmehr ist zwischen beiden Bauteilen eine Gleitverbindung 52 vorgesehen, die eine Druckkraftübertragung ermöglicht jedoch keine Zugkraftübertragung zulässt.

Wird der Kolbenraum 48 unter Druck gesetzt, so verschiebt sich der Kolben 46 gegen die Kraft der Druckfeder 50 nach unten und drückt über den Betätigungsschaft 44 auf den Balken 38, welcher gegen die Kraft der Hauptfeder 42 verschwenkt wird und den Riegel 24 nach oben verschiebt. Damit geht die Rolle 26 aus dem Bereich 30 mit flachem Winkel in den Bereich 28 mit steilerem Winkel über und gibt die Sperrklinke 12 frei, welche durch die Kraft der Rückstellfeder 22 in ihre ausgerückte Position geschwenkt wird.

Wird die im Kolbenraum 48 herrschende Druckkraft infolge eines Einrücksignals abgeschaltet, so reagiert der Kolben 46 unmittelbar. Er wird durch die Druckfeder 50 nach oben geschoben und drückt das Flüssigkeitsvolumen aus dem Kolbenraum 48. Wegen der Gleitverbindung 52 zwischen Kolben 46 und Betätigungsschaft 44 verschiebt sich der Kolben 46 unabhängig davon, ob die mechanischen Bauteile der Verriegelungseinrichtung 11 der Kolbenverschiebung folgen.

Die Ausbildung der genannten Gleitverbindung 52 wirkt sich dann besonders vorteilhaft aus, wenn zum Zeitpunkt eines Einrücksignals die Verzahnung der Sperrklinke 18 auf der Verzahnung des Ausgangszahnrades 10 aufsteht (Zahn auf Zahn), so dass ein Ineinandergreifen der Verzahnungen zunächst noch nicht möglich ist. Die Bauteile der Verriegelungseinrichtung 11, insbesondere der Balken 38 und der Betätigungsschaft 44 können dann nicht ihre eingerückte Position einnehmen. Unabhängig hiervon wird jedoch der Kolben 46 durch die Kraft der Druckfeder 50 nach oben geschoben und entleert den Kolbenraum 48, was infolge von Durchflusswiderständen der den Kolbenraum 48 ansteuernden hydraulischen Bauteile (abhängig von der Ölviskosität) eine kleine Zeitspanne beanspruchen kann. Erfolgt dann durch Verdrehen des Ausgangszahnrades 10 der Zahneingriff, können die Bauteile der Verriegelungseinrichtung 11 ohne Zeitverlust, schlagartig nachrücken, ohne dass die Einrückbewegung durch hydraulische Durchflusswiderstände und dergleichen gedämpft wird. Ein schneller Zahneingriff ist wünschenswert, um zu verhindern, dass das Ausgangszahnrad 10 bei starker Beschleunigung eine hohe Drehgeschwindigkeit erreicht, so dass durch hohe Relativbewegungen der Verzahnungen ein Zahneingriff erschwert wird oder nicht mehr möglich ist.

Die Steuerung des Druckmittelflusses zum und vom Kolbenraum 48 erfolgt durch zwei 3/2-Wege-Magnetventile 56, 58, die elektrische Befehle in hydraulische Befehle umsetzen. Der erste Eingang 60 des ersten Magnetventils 56 steht unter Zwischenschaltung eines federbelasteten Eingangsrückschlagventils 62 mit einer durch eine Druckquelle 64 gespeisten Druckversorgungsleitung 66 in Verbindung. Das Eingangsrückschlagventil 62 verhindert einen Druckmittelrückfluss von dem ersten Magnetventil 56 zu der Druckversorgungsleitung 66. Es öffnet, wenn der Druck in der Druckversorgungsleitung 66 eine Gegenkraft überwindet, die durch eine Feder des Eingangsrückschlagventils 62 erzeugt wird. Bei der Druckquelle 64 handelt es sich beispielsweise um eine Hydraulikpumpe und übliche Mittel zur Druckregulierung, die insbesondere auch andere Verbraucher des Ackerschleppers versorgen, was jedoch nicht dargestellt wurde.

Ein zweiter Eingang 68 des ersten Magnetventils 56 steht unmittelbar mit einem Vorratsbehälter 70 oder Sumpf in Verbindung. Der Ausgang 72 des ersten Magnetventils 56 ist bei anliegender elektrischer Spannung mit dem ersten Eingang 60 und im stromlosen Zustand (wie dargestellt) mit dem zweiten Eingang 68 verbunden.

Der Ausgang 72 des ersten Magnetventils 56 steht über eine erste Verbindungsleitung 74, in der ein erstes Rückschlagventil 76 angeordnet ist, mit einem ersten Eingang 78 des zweiten Magnetventils 58 und über eine zweite Verbindungsleitung 80, in der ein zweites Rückschlagventil 82 angeordnet ist, mit einem zweiten Eingang 84 des zweiten Magnetventils 58 in Verbindung. Das erste Rückschlagventil 76 ist federbelastet und so angeordnet, dass es einen Rückstrom vom zweiten Magnetventil 58 zum ersten Magnetventil 56 verhindert. Das zweite Rückschlagventil 82 ist federbelastet und so angeordnet, dass es einen Zustrom vom ersten Magnetventil 56 zum zweiten Magnetventil 58 verhindert.

Der Ausgang des zweiten Magnetventils ist bei anliegender elektrischer Spannung am zweiten Magnetventil 58 mit dem ersten Eingang 78 und im stromlosen Zustand des zweiten Magnetventils 58 mit dem zweiten Eingang 84 (wie dargestellt) verbunden. Der Ausgang 86 des zweiten Magnetventils 58 steht mit dem Kolbenraum 48 in Verbindung.

Der Kolbenraum 48 steht auch über eine weitere Ventilanordnung mit der Druckversorgungsleitung 66 in Verbindung, und zwar über das Eingangsrückschlagventil 62, ein Druckhalterückschlagventil 88, eine Verbindungsleitung 90, in der eine die Durchflussmenge begrenzende Drosselstelle 92 angeordnet ist, und ein Leckagekompensationsventil 94. Das Druckhalterückschlagventil 88 ist federbelastet und verhindert einen Flüssigkeitsrückfluss von dem Kolbenraum 48 zur Druckversorgungsleitung 66. Das Leckagekompensationsventil 94 ist ein federbelastetes Rückschlagventil, das den Flüssigkeitszustrom zum Kolbenraum 48 normalerweise verhindert und das sich durch ein vom Kolben 46 beeinflusstes Verbindungsglied öffnen lässt. Das Verbindungsglied enthält einen Steuerstift 96, dessen Kopf 98 in eine Ringnut 100 des Kolbens 46 eingreift, sofern sich der Kolben 46 in seiner drucklosen Ruhestellung befindet (wie dargestellt). In dieser Lage des Steuerstiftes 96 ist das Leckagekompensationsventil 94 geschlossen. Wenn sich der Kolben 46 durch Druckerhöhung im Kolbenraum 48 nach unten bewegt, wird der Steuerstift 96 aus der Ringnut 100 gedrückt und gleitet auf den dem Kolbenraum 48 zugewandten Bund 102 des Kolbens 46. Dabei verschiebt sich der Steuerstift 96 und öffnet das Leckagekompensationsventil 94, wodurch eine Verbindung zwischen der Druckversorgungsleitung 66 und dem Kolbenraum 48 hergestellt wird. Der Druckmittelstrom wird jedoch durch die Drosselstelle 92 begrenzt und reicht lediglich aus, um Leckageverluste auszugleichen. Wird der Kolbenraum 48 über die Magnetventile 56, 58 mit dem drucklosen Vorratsbehälter 70 verbunden, so fällt der Druck im Kolbenraum 48 ab, der Kolben 46 verschiebt sich nach oben, der Steuerstift 96 gleitet in die Ringnut 100 und das Leckagekompensationsventil 94 schließt unter Wirkung seiner Federkraft, so dass der Kolbenraum 48 von der Druckversorgungsleitung 66 getrennt ist.

Der Kolbenraum 48 steht über ein Ablassventil 104 mit dem Vorratsbehälter 70 in Verbindung. Ist der Kolbenraum 48 drucklos, wird das Ablassventil 104, das nach Art eines Rückschlagventils ausgebildet ist, durch Federkraft geöffnet. Über das Ablassventil 104 kann daher eine gewisse Leckflüssigkeitsmenge abgeführt werden, wenn bei drucklosem Kolbenraum 48 die Parksperre eingerückt ist. Werden die beiden Magnetventile 56, 58 eingeschaltet, die Verbindung von der Druckversorgung 64 zum Kolbenraum 48 also hergestellt, so wird das Ablassventil 104 durch die Strömungskraft der abfließenden Flüssigkeit geschlossen, so dass dann der Druck im Kolbenraum 48 ansteigt und die Parksperre ausrückt.

Der Druck des Kolbenraums 48 wird durch einen Drucksensor 106 erfasst und in elektrische Signale umgewandelt. Das vom Drucksensor 106 ausgegebene Drucksignal gibt im wesentlichen die jeweilige Stellung des Kolbens 46 und damit auch die Stellung der Verriegelungsvorrichtung 11 wieder.

Es ist eine manuell betätigbare mechanische Notbetätigungseinrichtung für die Parksperre vorgesehen, durch die sich die Parksperre ausrücken lässt, wenn eine Störung vorliegt, beispielsweise bei einem Ausfall der elektrischen oder hydraulischen Versorgung. Eine Notbetätigung kann z. B. für das Abschleppen des Fahrzeugs erforderlich sein. Die Notbetätigungseinrichtung greift an dem Kolben 46 an und wird über Gestänge oder Bowdenzug in die Fahrerkabine geführt und kann dort über geeignete Hebel oder Pedale von der Bedienungsperson betätigt werden. Zum Abschleppen muss diese Bedienung kabinenseitig arretiert werden. Die mechanische Parksperre ist so beschaffen, dass die normalen Bewegungen der oben beschriebenen Parksperrenmechanik zu keiner Bewegung der Notbetätigungseinrichtung führen. Dies wird über entsprechende Lose oder Freilauffunktionen sichergestellt.

Die dargestellte Notbetätigungseinrichtung enthält einen Betätigungsbolzen 108, der auf die Stirnseite des Kolbens 46 wirkt und über einen Umlenkhebel 110 und Bowdenzug 112 betätigbar ist. Die Durchführung des Betätigungsbolzens 108 vom Kolbenraum 48 nach außen ist auf geeignete Weise gedichtet. Hubbewegungen des Kolbens 46 beim Einrücken und Ausrücken der Parksperre werden nicht auf den in Ruhestellung dargestellten Betätigungsbolzen übertragen.

Es ist ein Kupplungspedal 114 des Fahrzeugs dargestellt, welches an einem auf einer ortsfesten Drehachse 116 montierten Pedalhebel 118 befestigt ist. Das Kupplungspedal 114 lässt sich für eine Notbetätigung der Parksperre nutzen, indem das obere Ende 120 des Bowdenzugs 112 mit dem freien Ende 122 des Pedalhebels 118 verbunden wird. Hierzu wird beispielsweise eine Bohrung des Bowdenzugs 112 in einen vom freien Ende 122 des Pedalhebels 118 abstehenden Bolzen 126 eingehängt und gegebenenfalls gesichert. Zum Einhängen und Sichern kann ein symbolisch dargestelltes Werkzeug 127 verwendet werden.

Bei Betätigung des Kupplungspedals 114, wird das eingehängte Ende 120 des Bowdenzugs 112 nach oben gezogen. Dabei verschwenkt der Umlenkhebel 110 und drückt den Betätigungsbolzen 108 nach unten, so dass der Kolben 46 über den Balken 40 den Riegel 24 nach oben zieht, so dass die Rolle 26 der Sperrklinke 12 in den Bereich 28 mit steilerem Winkel gelangt und die Sperrklinke 12 durch die Rückstellfeder 22 aus ihrer eingerückten Stellung (dargestellt) in ihre ausgerückte Stellung bewegt wird. Bei Entlastung des Kupplungspedals 114 nimmt der Pedalhebel 118 seine dargestellte Ruhelage ein, in die er durch eine übliche Kupplungspedalrückstellfeder gedrängt wird. Mit der Kraft der Hauptfeder 42 schiebt der Balken 38 den Riegel 24 nach unten, so dass die Rolle 26 in den Bereich 30 mit flachem Winkel gelangt und die Sperrklinke 12 in ihre eingerückte Lage drückt.

Damit während eines Abschleppvorganges das Kupplungspedal 114 nicht ständig betätigt werden muss, lässt sich dieses durch geeignete Maßnahmen in der betätigten Stellung blockieren. Dies erfolgt beispielsweise durch einen nicht dargestellten Blockierbolzen, der den Pedalhebel 118 in Bezug auf das Fahrzeugchassis festsetzt.

Die Position des Pedalhebels 118 wird durch einen elektrischen Lagesensor 130 erfasst, der mit dem freien Ende 122 des Pedalhebels 118 in Verbindung steht und der ein der jeweiligen Position des Pedalhebels 118 entsprechendes analoges elektrisches Signal ausgibt. Es kann sich dabei um ein mit der Drehachse 116 verbundenes Drehpotentiometer handeln. Im dargestellten Ausführungsbeispiel ist als Lagesensor ein Drehpotentiometer 130 dargestellt, welches über einen Dreharm 132 und eine Lasche 134 mit dem freien Ende 122 des Pedalhebels 118 in Verbindung steht.

Aus Redundanzgründen ist ein Lageschalter 128 vorgesehen, der ebenfalls mit dem freien Ende 122 des Pedalhebels 118 in Verbindung steht. Wenn das Kupplungspedal 114 nicht betätigt wird und sich der Pedalhebel 118 in seiner Ruhestellung befindet, ist der Lageschalter 128 offen. Er schließt, sobald das Kupplungspedal 114 voll durchgetreten ist. Bei Verwendung des Kupplungspedals 114 zur Notbetätigung der Parksperre zeigt das Ausgangssignal des Lageschalters 128 (Schließstellung) somit an, ob die Parksperre aufgehoben wurde.

Insbesondere bei Fahrzeugen mit stufenlosem Antrieb wird die Position des Kupplungspedals häufig durch Lagesensoren oder Lageschalter von einer Getriebesteuerung überwacht, um das Getriebe automatisch auf Neutral zu schalten, sobald das Kupplungspedal 114 betätigt wird. Es ist vorteilhaft diese bereits vorhandenen Bauteile zur Notbetätigung zu verwenden. Die Verwendung des Kupplungspedals 118 zur Notbetätigung ist auch vorteilhaft, weil sich durch die Fußbetätigung hohe Kräfte auf die Verriegelungsvorrichtung 11 übertragen lassen, so dass sich die Kraft der Hauptfeder 42 mühelos überwinden lässt.

Zur Ansteuerung der beiden Magnetventile 56, 58 ist eine elektronische Haupt- oder Getriebesteuereinheit 140 und eine Neben- oder Parksperrensteuereinheit 142 vorgesehen. Die Hauptsteuereinheit 140 steht über die Leitung 144 mit dem nicht gezeigten Zündschlossschalter des Fahrzeugs sowie über die Leitung 146 mit einer Fahrzeugsteuerung 148 in Verbindung, die ihrerseits die Stellung eines Bedienhebels 150 detektiert. Die Hauptsteuerung 140 empfängt über die Leitung 152 Signale von einem ersten Drehzahlsensor 154, der die Drehzahl des Ausgangszahnrades 10 erfasst, sowie über die Leitungen 156 und 158 Signale von dem Lageschalter 128 und von dem Drehpotentiometer 130, welche die Stellung des Kupplungspedals 114 erfassen. Die Hauptsteuereinheit 140 steuert über die Leitung 160 das erste Magnetventil 56 an.

Die Nebensteuereinheit 142 steht über die Leitung 162 unmittelbar mit der nicht gezeigten Fahrzeugbatterie in Verbindung. Sie ist darüber hinaus über die Leitung 164 mit dem Zündschlossschalter verbunden. Die Nebensteuereinheit 142 empfängt über die Leitung 165 Signale von dem Drucksensor 106 sowie über die Leitung 166 Signale von einem zweiten Drehzahlsensor 168, der unabhängig vom ersten Drehzahlsensor 154 die Drehzahl des Ausgangszahnrades 10 erfasst. Die Nebensteuereinheit 142 steuert über die Leitung 170 das zweite Magnetventil 58 an. Die Hauptsteuereinheit 140 und die Nebensteuereinheit 142 tauschen über einen CAN-Bus 172 Daten miteinander aus. Aus Redundanzgründen teilt die Nebensteuereinheit 142 über eine Leitung 174 der Hauptsteuereinheit 140 die durch den zweiten Drehzahlsensor 168 ermittelte Drehzahl mit.

Die Hauptsteuereinheit 140 gibt Signale zum Einlegen (kein Strom) oder Ausrücken (Strom) der Parksperre an die Magnetventile 56, 58 ab. Der Befehl hierzu kommt entweder von der Bedienungsperson über den Bedienhebel 150, die Fahrzeugsteuerung 148 und die Leitung 146 oder ergibt sich aus sicherheitsrelevanten Messgrößen, die in der Hauptsteuereinheit 140 verarbeitet werden. Der Befehl zum Ein- oder Ausrücken der Parksperre wird von der Hauptsteuereinheit 140 direkt zum ersten Magnetventil 56 und indirekt über die Leitung 174 und die Nebensteuereinheit 142, die weitere Überprüfungen vornimmt, zum zweiten Magnetventil 58 geleitet.

Sind beide Magnetventile 56, 58 stromlos, so ergeben sich die in der Zeichnung dargestellten Ventilpositionen, bei denen der Kolbenraum 48 über das zweite Magnetventil 58, das zweite Rückschlagventil 82 und das erste Magnetventil 56 mit dem Vorratsbehälter 70 verbunden ist. Dabei befindet sich der Kolben 46 infolge der Kraft der Druckfeder 50 in seiner oberen Stellung und die Verriegelungseinrichtung 11 wird durch die Hauptfeder 42 in die dargestellte eingerückte Position gedrängt. Das Ablassventil 104 wird durch seine Feder geöffnet und erlaubt ebenfalls einen unmittelbaren Druckausgleich zwischen dem Kolbenraum 48 und dem Vorratsbehälter 70.

Wird bei stromlosem ersten Magnetventil 56 lediglich das zweite Magnetventil 58 mit Strom beaufschlagt, so schaltet letzteres um und verbindet seinen ersten Eingang 78 mit seinem Ausgang 86. Da das erste Magnetventil 56 jedoch den Zustrom von der Druckversorgung sperrt, die Leitungen 74 und 80 nach wie vor mit dem Vorratsbehälter verbunden sind und da weiterhin das Ablassventil 104 offen bleibt, ändert dies nichts an der Stellung des Kolbens 46.

Wird bei stromlosem zweiten Magnetventil 58 lediglich das erste Magnetventil 56 mit Strom beaufschlagt, so schaltet letzteres um und verbindet seinen ersten Eingang 60 mit seinem Ausgang 72. Zwar steht nun in der Verbindungsleitung 80 der Systemdruck an, das zweite Rückschlagventil 82 verhindert jedoch einen Flüssigkeitszufluss zur Kolbenkammer 48. Der Rückfluss vom Kolbenraum zum Vorratsbehälter über 86, 84, 82, 80, 72 ist in diesem Zustand gesperrt, am Eingang 78 des zweiten Magnetventils 58 steht jedoch Druck an, der über eine interne Leckage des Magnetventils 58 zu einem geringen Leckfluss in den Kolbenraum 48 führt. Diese geringe Leckmenge wird über das offene Ablassventil 104 zum Vorratsbehälter 70 abgeführt, so dass sich kein Druck im Kolbenraum 48 aufbauen kann, der zum unerwünschten Ausrücken der Parksperre führen würde. Es ändert sich also auch in diesem Fall nichts am eingerückten Zustand der Parksperre.

Werden jedoch beide Magnetventile 56, 58 mit Strom beaufschlagt und schalten aus der dargestellten stromlosen Stellung in ihre erregte Stellung um, so wird der Systemdruck der Druckversorgungsleitung 66 über das Eingangsrückschlagventil 62, das erste Magnetventil 56, das erste Rückschlagventil 76 und das zweite Magnetventil 58 dem Kolbenraum 48 zugeführt und verschiebt den Kolben 46 gegen die Kraft der Druckfeder 50 und der Hauptfeder 42 nach unten. Die Verriegelungsvorrichtung 11 bewegt sich hierbei aus ihrer eingerückten Stellung in ihre ausgerückte Stellung. Durch den anstehenden Flüssigkeitsstrom schließt das Ablassventil 104. Bei dieser Kolbenstellung wird der Steuerstift 96 durch den Bund 102 des Kolbens 46 aus der Ringnut 100 gedrückt und öffnet das Leckagekompensationsventil 94, so dass der Systemdruck auch über die Verbindungsleitung 90, in der das Druckhalterückschlagventil 88, die Drosselstelle 92 und das Leckagekompensationsventil 94 angeordnet sind, am Kolbenraum 48 ansteht.

Wird bei erregtem (mit Strom beaufschlagtem) zweiten Magnetventil 58 lediglich das erste Magnetventil 56 stromlos gemacht, so schaltet letzteres um und verbindet seinen zweiten Eingang 68 mit seinem Ausgang 72. Zwar ist der Ausgang 72 nun mit dem Vorratsbehälter 70 verbunden, das erste Rückschlagventil 76 verhindert jedoch einen Flüssigkeitsrückfluss aus der Kolbenkammer 48. Dieser steht über die Verbindungsleitung 90 weiterhin mit der Druckversorgungsleitung 66 in Verbindung. Es ändert sich am ausgerückten Zustand der Parksperre nichts.

Wird bei erregtem ersten Magnetventil 56 lediglich das zweite Magnetventil 58 stromlos gemacht, so schaltet letzteres um und verbindet seinen zweiten Eingang 84 mit seinem Ausgang 86. Wegen der Wirkung des zweiten Rückschlagventils 82 ist nun ein Flüssigkeitszufluss von der Druckversorgungsleitung 66 zum Kolbenraum 68 nicht mehr möglich. Jedoch steht die Kolbenkammer 48 weiterhin über die Verbindungsleitung 90 mit der Druckversorgungsleitung 66 in Verbindung. Es ändert sich am ausgerückten Zustand der Parksperre nichts.

Unabhängig von der Stellung der Magnetventile 56, 58 wird durch das Eingangsrückschlagventil 62 ein Flüssigkeitsabfluss vom Kolbenraum 48 in die Druckversorgungsleitung 62 verhindert, so dass sich ein im Kolbenraum 48 aufgebauter Druck nicht wegen eines unbeabsichtigten Druckabfalls in der Druckversorgungsleitung 62 abbaut. Das Druckhalterückschlagventil 88 verhindert einen Flüssigkeitsabfluss vom Kolbenraum 48 über interne Leckage des ersten Magnetventils 56 vom Eingang 60 zum Eingang 68 und damit zum Vorratsbehälter 70. Insbesondere bei Systemdruckausfall während der Fahrt kann eine Restleckage vom Kolbenraum 48 zum Vorratsbehälter 70 auftreten, und zwar über eine interne Leckage des zweiten Magnetventils 58 (vom Ausgang 86 zum Eingang 84), das Rückschlagventil 82 und eine interne Leckage des ersten Magnetventils 56 (vom Ausgang 72 zum Eingang 68). Diese Leckage ist über eine entsprechende Auslegung der Magnetventile 56, 58 derart gering, dass auch bei hoher Öltemperatur (geringe Viskosität) der Druck im Kolbenraum für ca. 10 Minuten soweit aufrechterhalten werden kann, dass ein Einrücken der Parksperre nicht erfolgt.

Werden beide Magnetventile 56, 58 aus ihrem erregten Zustand in ihren stromlosen Zustand umgeschaltet, so wird der Kolbenraum 48 über das zweite Magnetventil 58, das zweite Rückschlagventil 82 und das erste Magnetventil 56 mit dem Vorratsbehälter 70 verbunden, so dass ein Flüssigkeitsabfluss aus dem Kolbenraum 48 zum Vorratsbehälter 70 erfolgt. Die Drosselstelle 92 begrenzt den Flüssigkeitsstrom durch die Verbindungsleitung 90, so dass dieser nicht ausreicht, um den Druck in dem Kolbenraum 48 aufrechtzuerhalten. Der Kolben 46 wandert nach oben, der Steuerstift 96 gleitet in die Ringnut 100 und das Leckagekompensationsventil 94 schließt, so dass der Flüssigkeitsnachfluss über die Verbindungsleitung 90 unterbrochen wird. Das Ablassventil 104 öffnet. Gleichzeitig rückt die Verriegelungseinrichtung 11 die Parksperre ein.

Somit erfolgt eine Umschaltung der Parksperrenfunktion (Druckbeaufschlagung oder Druckentlastung des Kolbenraums) nur dann, wenn beide Magnetventile 56, 58 gleichsinnig umgeschaltet werden, wenn also die Steuereinheiten 140, 142 entsprechende Umschaltsignale an die Magnetventile 56 und 58 abgeben.

Falls keine Störung vorliegt, gibt die Hauptsteuereinheit 140 ein Stromsignal zur Erregung des ersten Magnetventils 56 ab und die Nebensteuereinheit 142 gibt ein Stromsignal zur Erregung des zweiten Magnetventils 58 ab. Wenn der Fahrhebel 150 in seine Parkstellung gebracht wird und die durch die Drehzahlsensoren 154, 168 erfasste Drehzahl des Ausgangszahnrades 10 unter einem vorgebbaren Wert liegt, wird durch die Hauptsteuereinheit 140 der Stromfluss zum ersten Magnetventil 56 unterbrochen. Wenn die durch den Drehzahlsensor 168 erfasste Drehzahl des Ausgangszahnrades 10 unter einem vorgebbaren Wert liegt, wird durch die Nebensteuereinheit 140 auch der Stromfluss zum zweiten Magnetventil 58 unterbrochen.

Weil die Hauptsteuereinheit 140 und die Nebensteuereinheit 142 von den beiden Drehzahlsensoren 154 und 168 unabhängige Drehzahlsignale des Fahrzeugantriebs erhalten, kann zuverlässig (Redundanz) verhindert werden, dass eine defekte Steuereinheit 140, 142 oder ein defekter Drehzahlsensor 154, 168 zu einem unbeabsichtigten Parksperreneinlegen oberhalb einer vorgegebenen Fahrgeschwindigkeit führt.

Durch die direkte Spannungsversorgung der Nebensteuereinheit 142 von der Batterie wird gewährleistet, dass ein Abstellen der Zündung während der Fahrt nicht zum Einlegen der Parksperre führt, weil dann das zweite Magnetventil 58 kein Signal zum Umschalten erhält. Die Leitung 164 vom Zündschlüssel zur Nebensteuereinheit 142 dient lediglich als Wecksignal für die Nebensteuereinheit 142. Die beiden Steuereinheiten 140, 142 sind über einen Kommunikations-BUS 174 verbunden, der eine gegenseitigen Überwachung ermöglicht.

Der Drucksensor 106 liefert an die Nebensteuereinheit 142 jederzeit eine Rückmeldung über die tatsächliche Parksperrenposition. Oberhalb einer oberen Druckschwelle (z.B. 15 bar) gilt die Parksperre als ausgerückt (entriegelt), unterhalb eines unteren Schwellwertes (z.B. 1 bar) gilt die Parksperre als eingelegt. Die untere Druckschwelle liegt sinnvollerweise unterhalb eines Druckes, der sich aus der Federkraft der Druckfeder 50 und der Kolbenfläche des Kolbens 46 ergibt, so dass dieser Wert also erst unterschritten wird, wenn der Kolben 46 am Anschlag der eingerückten Stellung steht, auch wenn das mechanische Gestänge der Verriegelungseinrichtung 11 in der Zahn-auf-Zahn-Stellung blockiert ist und (noch) nicht einrastet.

Wenn die Notbetätigung, z. B. bei Verlust der Parksperrenfunktion, für das Abschleppen benutzt wird und hierbei der Dieselmotor in Betrieb sein soll (um beispielsweise den Versorgungsdruck für die Servolenkung und -bremsen bereitzustellen), erhält die als Getriebesteuereinheit ausgebildete Hauptsteuereinheit 140 über den Lageschalter 128 und das Drehpotentiometer 130 am Kupplungspedal die Anforderung, das Getriebe auf "Neutral" einzustellen. Hiermit wird zuverlässig und ohne zusätzliche Sensoren verhindert, dass das Fahrzeug mit permanent manuell ausgerückter Parksperre betrieben wird. Der Lageschalter 128 und das Drehpotentiometer 130 können somit sowohl für die Getriebesteuerung als auch für die Steuerung der Notfunktion genutzt werden.

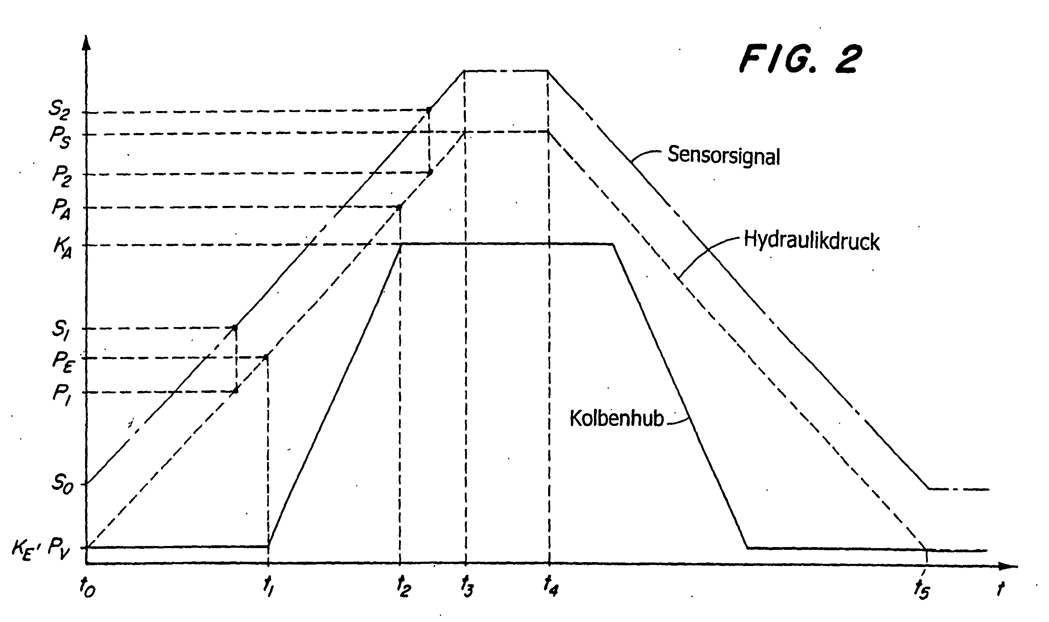

Die Fig. 2 zeigt den zeitlichen Verlauf des Hydraulikdrucks im Kolbenraum 48, des Kolbenhubs und des Signals des Drucksensors 106 während einer gleichmäßigen Druckbeaufschlagung und anschließender Druckentlastung des Kolbenraums 48 des Hydraulikzylinders der Parksperre.

In der Ausgangsstellung verbinden die Magnetventile 56, 58 den Kolbenraum 48 mit dem Vorratsbehälter 70, so dass im Kolbenraum 48 der Druck Pᵥ des Vorratsbehälters 70 herrscht, der gewöhnlich Null ist. Zur Zeit t₀ schalten die Magnetventile 56, 58 um und verbinden den Kolbenraum 48 mit der Hydraulikpumpe 64, so dass der Druck im Kolbenraum 48 bis zum Wert des Systemdrucks Pₛ ansteigt, der zur Zeit t₃ erreicht wird. Der Druckanstieg muss in der Praxis nicht dem vereinfacht dargestellten linearen Verlauf folgen. Zum Zeitpunkt t₄ werden die Magnetventile 56, 58 umgeschaltet und verbinden nun den Kolbenraum 48 mit dem Vorratsbehälter 70, so dass der Druck im Kolbenraum wieder auf den Druck Pᵥ absinkt, der zur Zeit t₅ erreicht wird.

Aus dem in Fig. 2 dargestellten Verlauf des Kolbenhubs ist erkennbar, dass der Kolben 46 anfangs beim Kolbenraumdruck Pᵥ voll eingefahren ist und an einem nicht dargestellten Anschlag im Kolbenraum 48 anliegt. Mit steigendem Druck im Kolbenraum ändert der Kolben 46 zunächst seine Lage nicht und verharrt in seiner eingefahrenen Kolbenstellung K_{E}. Erst wenn zum Zeitpunkt t₁ der Kolbenraumdruck einen Wert P_{E} erreicht, der der auf dem Kolben 46 lastenden Federkraft dividiert durch die wirksame Kolbenfläche entspricht, beginnt der Kolben 46 infolge des zunehmenden Drucks im Kolbenraum 48 in Richtung seiner entriegelten Stellung auszufahren. Zur Zeit t₂ wird die voll ausgefahrene Kolbenstellung K_{A} erreicht. Zu diesem Zeitpunkt t₂ entspricht der Kolbenraumdruck P_{A} der nun auf dem Kolben 46 lastenden maximalen Federkraft dividiert durch die wirksame Kolbenfläche. Eine weitere Drucksteigerung hat keinen Einfluss auf die Kolbenstellung. Bei fallendem Kolbenraumdruck verhält sich die Kolbenbewegung entsprechend.

Das Sensorsignal entspricht dem Druck im Kolbenraum 48, weist jedoch eine Nullpunktverschiebung auf, so dass es bei dem Anfangsdruck Pᵥ den Wert S₀ annimmt, der z. B. 0,5 V betragen kann. Das Sensorsignal ist durch zwei Schwellwerte charakterisiert. Der erste, untere Schwellwert S₁ ist durch einen Kolbenraumdruck charakterisiert, der größer als der Druck Pᵥ des Vorratsbehälters 70, jedoch kleiner als der Druck P₁ zum Zeitpunkt t₁ ist, welcher dem Quotienten aus der auf den Kolben 46 lastenden Restkraft (Federvorspannung) der Feder 50 und der wirksamen Kolbenfläche entspricht. Vorzugsweise liegt der erste Schwellwert S₁ zwischen 40 % und 80 % des der Restkraft entsprechenden Druckwertes. Liegt der Druck am Kolbenanschlag beispielsweise bei P₁ = 2 bar, so kann der erste Schwellwert einem Druck von etwa 0,8 und 1,2 bar entsprechen.

Der zweite, obere Schwellwert S₂ ist durch einen Kolbenraumdruck P₂ charakterisiert, der größer als der Kolbenraumdruck zum Zeitpunkt t₂ jedoch kleiner als der Systemdruck Pₛ ist. Der Kolbenraumdruck P_{A} zum Zeitpunkt t₂ ist gleich dem Quotienten aus der auf den maximal ausgerückten Kolben 46 lastenden maximalen Federkraft der Federn 42 und 50 und der wirksamen Kolbenfläche. Vorzugsweise liegt der zweite Schwellwert S₂ zwischen 40 % und 80 % des Versorgungs- oder Systemdrucks Pₛ. Bei einem Systemdruck von Pₛ = 20 bar liegt der zweite Schwellwert vorzugsweise zwischen 14 und 17 bar.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Parksperre eines Kraftfahrzeugs mit einer Steuereinrichtung, die wenigstens einen Hydraulikzylinder aufweist, dessen Kolbenraum (48) mittels einer Ventilanordnung (56, 58) mit Hydraulikdruck beaufschlagbar ist und dessen Hydraulikkolben (46) mit Eingriffselementen der Parksperre mechanisch in Verbindung steht und in Abhängigkeit des Hydraulikdrucks die Parksperre in eine eingerückte bzw. ausgerückte Position drängt, wobei der Kolbenraum (48) mit einem Drucksensor (106) in Verbindung steht, dessen Drucksignale den Zustand der Parksperre repräsentieren und durch eine elektrische Steuereinheit (140, 142) ausgewertet werden, **dadurch gekennzeichnet, dass** durch die Steuereinheit (140, 142) wenigstens eine erste vorgebbare Druckschwelle (S₁) definiert ist, die dem eingerückten Zustand der Parksperre entspricht und wenigstens eine zweite vorgebbare Druckschwelle (S₂) definiert ist, die dem ausgerückten Zustand der Parksperre entspricht.

2. Parksperre nach Anspruch 1, **dadurch gekennzeichnet, dass** die Verbindung zwischen dem Hydraulikkolben (46) und einer Betätigungsmechanik für die Parksperre derart ausgelegt ist, dass lediglich Druckkräfte übertragen werden.

3. Parksperre nach Anspruch 2, **dadurch gekennzeichnet, dass** eine Druckfeder (50) vorgesehen ist, die den Hydraulikkolben (46) unabhängig von der Betätigungsmechanik in seine drucklose Stellung drängt.

4. Parksperre nach einem der Ansprüche 1 bis 3, **dadurch gekennzeichnet, dass** eine an der Betätigungsmechanik der Parksperre angreifende Hauptfeder (42) vorgesehen ist, die die Betätigungsmechanik in ihre Sperrstellung und mittelbar den Hydraulikkolben (46) in seine drucklose Stellung drängt.

5. Parksperre nach einem der Ansprüche 1 bis 4, **dadurch gekennzeichnet, dass** der Hydraulikkolben (46) durch wenigstens eine Feder (42, 50) in seine drucklose Anschlagstellung gedrängt wird, in der die auf den Hydraulikkolben (46) wirkende Federkraft größer als Null ist, und dass die erste Druckschwelle (S₁) einem Wert entspricht, der zwischen Null und dem Kolbendruck (P_{E}) liegt, der der genannten Federkraft entspricht.

6. Parksperre nach Anspruch 5, **dadurch gekennzeichnet, dass** die erste Druckschwelle (S₁) einem Wert entspricht, der zwischen 40% und 80% des der Federvorspannung entsprechenden Druckwertes (P_{E}) liegt.

7. Parksperre nach einem der Ansprüche 1 bis 6, **dadurch gekennzeichnet, dass** der Hydraulikkolben (46) durch wenigstens eine Feder (42, 50) in Richtung seiner drucklosen Anschlagstellung gedrängt wird und dass die zweite Druckschwelle (S₂) einem Wert entspricht, der zwischen einem Kolbendruck (P_{A}), der der maximalen Federkraft in der ausgerückten Stellung des Hydraulikkolbens (46) entspricht, und dem durch die Ventilanordnung bereitgestellten Hydrauliksystemdruck (P_{S}) liegt.

8. Parksperre nach Anspruch 7, **dadurch gekennzeichnet, dass** die zweite Druckschwelle (S₂) einem Wert entspricht, der zwischen 60 % und 90 % des Versorgungs- oder Systemdrucks (P_{S}) liegt.

9. Parksperre nach einem der Ansprüche 1 bis 8, **dadurch gekennzeichnet, dass** der Drucksensor (106) ein analoger Sensor ist.

10. Parksperre nach einem der Ansprüche 1 bis 9, **dadurch gekennzeichnet, dass** der Drucksensor (106) bei drucklosem Kolbenraum (48) ein Drucksensorsignal liefert, das größer als Null ist.

## Claims

1. Motor vehicle parking brake having a control device which has at least one hydraulic cylinder, the piston chamber (48) of which may be charged with hydraulic pressure by means of a valve arrangement (56, 58) and the hydraulic piston (46) of which is mechanically connected to engagement elements of the parking brake and forces the parking brake into an engaged or disengaged position depending on the hydraulic pressure, the piston chamber (48) being connected to a pressure sensor (106), the pressure signals from which represent the state of the parking brake and are evaluated by an electrical control unit (140, 142), **characterised in that** the control unit (140, 142) defines at least one first presettable pressure threshold (S₁), which corresponds to the engaged state of the parking brake, and at least a second presettable pressure threshold (S₂) which corresponds to the disengaged state of the parking brake.

2. Parking brake according to claim 1, **characterised in that** the connection between the hydraulic piston (46) and an actuating mechanism for the parking brake is designed in such a way that only pressure forces are transmitted.

3. Parking brake according to claim 2, **characterised in that** a compression spring (50) is provided which forces the hydraulic piston (46) into its unpressurised position independently of the actuating mechanism.

4. Parking brake according to one of claims 1 to 3, **characterised in that** a main spring (42) is provided which engages on the actuating mechanism of the parking brake, forcing the actuating mechanism into its locked position and indirectly forcing the hydraulic piston (46) into its unpressurised position.

5. Parking brake according to one of claims 1 to 4, **characterised in that** the hydraulic piston (46) is forced by at least one spring (42, 50) into its unpressurised stop position in which the spring force acting on the hydraulic piston (46) is greater than zero, and **in that** the first pressure threshold (S₁) corresponds to a value which lies between zero and the piston pressure (P_{E}) corresponding to the said spring force.

6. Parking brake according to claim 5, **characterised in that** the first pressure threshold (S₁) corresponds to a value which lies between 40% and 80% of the pressure value (P_{E}) corresponding to the initial spring tension.

7. Parking brake according to one of claims 1 to 6, **characterised in that** the hydraulic piston (46) is forced by at least one spring (42, 50) in the direction of its unpressurised stop position, and **in that** the second pressure threshold (S₂) corresponds to a value which lies between a piston pressure (P_{A}), corresponding to the maximum spring force in the disengaged position of the hydraulic piston (46), and the hydraulic system pressure (P_{S}) provided by the valve arrangement.

8. Parking brake according to claim 7, **characterised in that** the second pressure threshold (S₂) corresponds to a value which lies between 60% and 90% of the supply or system pressure (P_{S}).

9. Parking brake according to one of claims 1 to 8, **characterised in that** the pressure sensor (106) is an analogue sensor.

10. Parking brake according to one of claims 1 to 9, **characterised in that** the pressure sensor (106) supplies a pressure sensor signal which is greater than zero when the piston chamber (48) is unpressurised.

## Revendications

1. Frein de stationnement d'un véhicule automobile comportant un dispositif de commande, qui comporte au moins un vérin hydraulique, dont le compartiment à piston (48) peut être sollicité par une pression hydraulique au moyen d'un système de vannes (56, 58) et dont le piston hydraulique (46) est en liaison mécanique avec des éléments de prise du frein de stationnement et, en fonction de la pression hydraulique, pousse le frein de stationnement dans une position enclenchée ou déclenchée, le compartiment à piston (48) étant relié à un capteur de pression (106), dont les signaux représentent la position du frein de stationnement et sont analysés par une unité de commande (140, 142) électrique, **caractérisé en ce que** par l'unité de commande (140, 142) est défini au moins un premier seuil de pression (S1) prédéfinissable qui correspond à la position enclenchée du frein de stationnement et au moins un deuxième seuil de pression (S2) prédéfinissable qui correspond à la position déclenchée du frein de stationnement.

2. Frein de stationnement selon la revendication 1, **caractérisé en ce que** la liaison entre le piston hydraulique (46) et un mécanisme de manoeuvre pour le frein de stationnement est conçue de telle sorte que seules des forces de pression sont transmises.

3. Frein de stationnement selon la revendication 2, **caractérisé en ce qu'**il est prévu un ressort de pression (50) qui, indépendamment du mécanisme de manoeuvre, pousse le piston hydraulique (46) dans sa position non sollicitée en pression.

4. Frein de stationnement selon l'une quelconque des revendications 1 à 3, **caractérisé en ce qu'**il est prévu un ressort principal (42), qui entre en prise avec le mécanisme de manoeuvre du frein de stationnement et qui pousse le mécanisme de manoeuvre dans sa position de verrouillage et indirectement le piston hydraulique (46) dans sa position non sollicitée en pression.

5. Frein de stationnement selon l'une quelconque des revendications 1 à 4, **caractérisé en ce que** le piston hydraulique (46) est poussé par au moins un ressort (42, 50) dans sa position de butée non sollicitée en pression, dans laquelle la force de ressort exercée sur le piston hydraulique (46) est supérieure à zéro et **en ce que** le premier seuil de pression (S1) correspond à une valeur qui se situe entre zéro et la pression du piston (PE), qui correspond à ladite force de ressort.

6. Frein de stationnement selon la revendication 5, **caractérisé en ce que** le premier seuil de pression (S1) correspond à une valeur qui se situe entre 40% et 80% de la valeur de pression (PE), qui correspond à la précontrainte du ressort.

7. Frein de stationnement selon l'une quelconque des revendications 1 à 6, **caractérisé en ce que** le piston hydraulique (46) est poussé par au moins un ressort (42, 50) en direction de sa position de butée non sollicitée en pression et **en ce que** le deuxième seuil de pression (S2) correspond à une valeur qui se situe entre une pression du piston (PA), qui correspond à la force de ressort maximale dans la position déclenchée du piston hydraulique (46), et la pression (PS) du système hydraulique fournie par le système de vannes.

8. Frein de stationnement selon la revendication 7, **caractérisé en ce que** le deuxième seuil de pression (S2) correspond à une valeur qui se situe entre 60% et 90% de la pression d'alimentation ou pression du système (PS).

9. Frein de stationnement selon l'une quelconque des revendications 1 à 8, **caractérisé en ce que** le capteur de pression (106) est un capteur analogique.

10. Frein de stationnement selon l'une quelconque des revendications 1 à 9, **caractérisé en ce que**, lorsque le compartiment à piston (48) n'est pas sollicité en pression, le capteur de pression (106) délivre un signal qui est supérieur à zéro.
